**Europäisches Patentamt**

(19) **European Patent Office** (11) Veröffentlichungsnummer: **0 136 406**
**B1**

**Office européen des brevets**

(12) **EUROPÄISCHE PATENTSCHRIFT**

(45) Veröffentlichungstag der Patentschrift:
16.09.87

(21) Anmeldenummer: **84106924.8**

(22) Anmeldetag: **16.06.84**

(51) Int. Cl.⁴: **G 05 D 23/19, A 47 J 27/62**

(54) Verfahren und Vorrichtung zum Steuern des Gar- bzw. Kochvorganges bei einem Dampfdruckkochgefäss.

(30) Priorität: **29.06.83 DE 3323399**

(43) Veröffentlichungstag der Anmeldung:
**10.04.85 Patentblatt 85/15**

(45) Bekanntmachung des Hinweises auf die Patenterteilung:
**16.09.87 Patentblatt 87/38**

(84) Benannte Vertragsstaaten:
**AT BE CH FR GB IT LI LU NL SE**

(56) Entgegenhaltungen:
**EP - A - 0 023 724**
**EP - A - 0 127 785**
**CH - A - 355 876**
**DE - A - 1 679 167**
**DE - A - 2 456 663**
**DE - A - 2 734 470**
**DE - A - 3 004 088**
**US - A - 2 483 628**

(73) Patentinhaber: **Kurt Wolf & Co. KG,**
**Langwiesenweg 67/71, D-7547 Wildbad (DE)**

(72) Erfinder: **Andre, Wolfram, Dipl.-Ing., Eichenweg 7,**
**D-7303 Aichwald 4 (DE)**

(74) Vertreter: **Vogel, Georg, Hermann-Essig-Strasse 35,**
**D-7141 Schwieberdingen (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

### Beschreibung

Die Erfindung betrifft ein Verfahren und eine Vorrichtung zur Durchführung des Verfahrens zum Steuern des Gar- bzw. Kochvorganges bei einem mittels eines über eine Steuerschaltung gesteuerten Heizelementes beheizten Dampfdruckkochgefäss, bei dem die Temperatur im bzw. am Dampfdruckkochgefäss erfasst und die Steuerschaltung zur Regelung der Heizleistung des Heizelementes ausgenützt wird und bei dem mittels eines einstellbaren Zeitgliedes eine Gar- bzw. Kochzeit vorgebbar ist.

Es sind Vorrichtungen dieser Art bekannt, z.B. aus US-A-2483628, EP-A1-0023724 und DE-A1-3004088. Bei einer solchen Vorrichtung gemäss EP-A1-0023724 ist das Zeitglied elektrisch und mechanisch von der Steuerschaltung des Heizelementes getrennt und manuell einstellbar. Nach dem Ablauf der vorgegebenen Gar- bzw. Kochzeit wird von dem Zeitglied ein akustisches Signal abgegeben, das das Ende der Gar- bzw. Kochzeit anzeigt. Die Abschaltung des Heizelementes erfolgt dann manuell mit all den möglichen Fehlerquellen, die sich auch auf die Gar- bzw. Kochzeit auswirken.

Bei dieser aus EP-A1-0023724 bekannten Vorrichtung wird die Gar- bzw. Kochzeit als feste Grösse vorgegeben, die die Zeitkonstante des aus Heizelement und Dampfdruckkochgefäss bestehenden Gar- bzw. Kochsystems unberücksichtigt lässt. Je nach Grösse des Dampfdruckkochgefässes, der Heizleistung des Heizelementes und der Menge an Kochgut im Dampfdruckkochgefäss weist das Gar- bzw. Kochsystem auch noch unterschiedliche Aufheizphasen und Abkühlphasen auf, die sich in verschiedenen Temperatur-Zeit-Kennlinien während des Gar- bzw. Kochvorganges auswirken. Neben den Unzulänglichkeiten der manuellen Abschaltung des Heizelementes wird also bei dieser bekannten Vorrichtung auch noch diese unterschiedliche Zeitkonstante des Gar- bzw. Kochsystems ausser acht gelassen. Die über das Zeitglied vorgegebene Gar- bzw. Kochzeit kann aber gerade durch diese Abhängigkeiten des Gar- bzw. Kochsystems von diesen Eigenschaften so beeinflusst werden, dass sie zu kurz oder zu lang sein kann. In der Aufheizphase beginnt die Abmessung der Gar- bzw. Kochzeit erst bei Erreichen eines vorgegebenen Temperaturwertes von z.B. 80 °C. Ausserdem läuft das Zeitglied um so schneller ab, je höher die Gar- bzw. Kochtemperatur über einem Grenzwert liegt, was auch umgekehrt gilt. In der Abkühlphase bleibt nach der Abschaltung des Heizelementes das Gar- bzw. Kochsystem noch eine mehr oder weniger grosse Zeit auf der Gar- bzw. Kochtemperatur, so dass die vorgegebene Gar- bzw. Kochzeit verlängert wird.

Bei dieser bekannten Vorrichtung tritt eine weitere Unzulänglichkeit auf, da die Gar- bzw. Kochzeit je nach Art des Kochgutes und der Menge des Kochgutes auf die Zeitkonstanten des Gar- bzw. Kochsystems unterschiedlich beeinflusst wird. Wird z.B. eine Suppe, ein Gemüseeintopf oder dgl. gekocht, dann sind die Verhältnisse anders als beim Kochen von Kartoffeln, Fleisch oder dgl. über einem Wasserbad zur Erzeugung des Dampfes. Diese unterschiedlichen Kocharten werden im folgenden als Garen bzw. Kochen von «flüssigem» und «festem» Kochgut gekennzeichnet. Diese unterschiedlichen Kocharten werden gelegentlich auch als «Kochen» oder «Dämpfen» bezeichnet.

Bei der aus DE-A1-3004088 bekannten Vorrichtung wird ein Garparameter ermittelt, der aus der Garzeit und dem Produkt aus Garzeit und Gartemperatur gewichtet berechnet wird, und mit einem Soll-Garparameter (Kochzeit in Minuten) verglichen, wodurch z.B. eine Erhöhung der Gartemperatur zu einer Verkürzung der Garzeit führt und umgekehrt. In der Abkühlphase bleibt nach der Abschaltung des Heizelementes das Gar- bzw. Kochsystem ebenfalls noch eine mehr oder weniger lange Zeit auf der Gar- bzw. Kochtemperatur, so dass die vorgegebene Gar- bzw. Kochzeit verlängert wird.

Aus der nur zum Stand der Technik gemäss Art. 54 (3) EPÜ gehörenden EP-A1-0127785 ist ein zu Anspruch 1 ähnliches Verfahren bekannt, das sich dadurch unterscheidet, dass kein Anstieg der Temperatur-Zeit-Kennlinie ermittelt wird.

Es ist Aufgabe der Erfindung, ein Verfahren zum Steuern des Gar- bzw. Kochvorganges bei einem Dapfdruckkochgefäss der eingangs erwähnten Art zu schaffen, bei dem die vorgegebene Gar- bzw. Kochzeit abhängig von den Zeitkonstanten des Gar- bzw. Kochsystems, der Kochart und der Kochgutmenge, automatisch so verändert wird, dass im bzw. am Dapfdruckkochgefäss die Gar- bzw. Kochtemperatur tatsächlich auch über die vorgegebene Gar- bzw. Kochzeit eingehalten wird.

Dieses Verfahren ist nach der Erfindung dadurch gekennzeichnet, dass in der Aufheizphase der Anstieg der Temperatur-Zeit-Kennlinie des gesamten Systems aus Heizelement und Dampfdruckkochgefäss ermittelt wird, dass die Zeitdauer, die vom Erreichen der Temperatur des Beginns der Dampfphase bis zum Erreichen der Verdampfungstemperatur des Wassers im Dampfdruckkochgefäss verstreicht, gemessen wird, und dass die vorgegebene Gar- bzw. Kochzeit in Abhängigkeit des ermittelten Anstieges und der gemessenen Zeitdauer so beeinflusst wird, dass sie um eine Zeitspanne verkürzt wird, die um so grösser ist, desto kleiner der ermittelte Anstieg und desto grösser die ermittelte Zeitdauer sind.

Dieses Verfahren nützt die Erkenntnisse aus, dass die Abkühlphase nach dem Abschalten des Heizelementes, d.h. der Verlauf der Temperatur-Zeit-Kennlinie in der Abkühlphase, abhängig ist von dem Gar- bzw. Kochsystem aus Heizelement und Dampfdruckgefäss, von der Kochart, sowie von der Kochgutmenge. Dies drückt sich in dem Anstieg der Temperatur-Zeit-Kennlinie in der Aufheizphase und der Zeitdauer aus, die vom Erreichen der vom Beginn der Dampfphase zugeordneten Temperatur bis zum Erreichen der Verdampfungstemperatur des Wassers verstreicht. Dabei hat sich gezeigt, dass der Anstieg der Temperatur-Zeit-Kennlinie sich in Abhängigkeit von der Menge an flüssigem Kochgut verändert, während die Zeitdauer sich mit zunehmender Menge an festem Kochgut entsprechend vergrössert. Die Kochgutmenge drückt sich in der Abkühlphase aus, die mit zunehmender Kochgutmenge verlängert wird.

Berücksichtigt man den ermittelten Anstieg der Temperatur-Zeit-Kennlinie in der Aufheizphase und die ermittelte Zeitdauer zur vorstehend genannten Temperaturerhöhung, dann ergibt sich daraus ein Mass für die Kochart und die Kochgutmenge, und es kann eine Aussage über die im konkret vorliegenden Gar- bzw. Kochvorgang auftretende Abkühlphase gemacht werden. Die Abkühlphase, die ja die Gar- bzw. Kochzeit beeinflusst, kann daher vorausgesagt und zu einer entsprechenden Anpassung, d.h. Verkürzung, der vorgegebenen Gar- bzw. Kochzeit ausgenützt werden.

Dabei wird nach einer Ausgestaltung des Verfahrens so verfahren, dass mit dem ermittelten Anstieg der Temperatur-Zeit-Kennlinie aus einer für das gesamte System aus Heizelement und Dampfdruckkochgefäss gegebenen ersten Funktion $\frac{\Delta T}{\Delta t} = f(M)$ für den Anstieg in Abhängigkeit von der Menge an flüssigem Kochgut die im Dampfdruckkochgefäss befindliche Menge an flüssigem Kochgut in äquivalenten Wassereinheiten ermittelt wird und dass aus einer gegebenen zweiten Funktion tv = f(M) für die Zeitspanne in Abhängigkeit von der Menge an flüssigem Kochgut des Systems die Zeitspanne ermittelt wird, um die die vorgegebene Gar- bzw. Kochzeit für die im Dampfdruckkochgefäss befindliche Menge an flüssigem Kochgut zu verkürzen ist, bzw. dass mit der gemessenen Zeitdauer sx aus einer für das gesamte System aus Heizelement und Dampfdruckkochgefäss gegebenen ersten Funktion s = f(M') für die Zeitdauer in Abhängigkeit von der Menge an festem Kochgut die im Dampfdruckkochgefäss befindliche Menge an festem Kochgut über einer zur Dampfbildung eingebrachten kleinen Wassermenge in äquivalenten Wassereinheiten WE ermittelt wird und dass aus einer für das gesamte System gegebenen zweiten Funktion tv = f(M') für die Zeitspanne in Abhängigkeit von der Menge an festem Kochgut die Zeitspanne tvx ermittelt wird, um die die vorgegebene Gar- bzw. Kochzeit für die im Dampfdruckkochgefäss befindliche Menge an festem Kochgut zu verkürzen ist. Bei flüssigem Kochgut ist die Funktion $\frac{\Delta T}{\Delta t} = f(M)$ für ein Gar- bzw. Kochsystem aus Dampfdruckkochgefäss und Heizelement eine gegebene Grösse. Wenn man also den Anstieg der Temperatur-Zeit-Kennlinie T = f(t) in der Aufheizphase ermittelt, lässt sich aus dieser Vorgabe die im Dampfdruckkochgefäss enthaltene Menge M an flüssigem Kochgut in äquivalenten Wassereinheiten WE ableiten. Bei festem Kochgut über einem Wasserbad zur Dampferzeugung ist die Zeitdauer s, die vom Erreichen des Beginns der Dampfphase bei Td ~ 90 °C bis zum Erreichen der Verdampfungstemperatur Tv ~ 100 °C des Wassers verstreicht, gemäss der Funktion s = f(M') eine weitere Grösse, die das Gar- bzw. Kochsystem kennzeichnet. Die Zeitdauer s ist nämlich abhängig von der Menge M' an festem Kochgut in äquivalenten Wassereinheiten WE über dem Wasserbad im Dampfdruckkochgefäss. Da es sich gezeigt hat, dass die Abkühlphase sowohl von der Menge M an flüssigem, als auch der Menge M' an festem Kochgut abhängt, und zwar von der Gesamtmenge Mg = M+M', lässt sich für ein Gar- bzw. Kochsystem auch eine feste Funktion tv = f(M+M') vorgeben, aus der nach Ableitung der Mengen M und M' aus den Funktionen $\Delta T = f(M)$ und s = $\frac{}{\Delta t}$ f(M') die Zeitspanne tv ermittelt werden kann, um für den gegebenen Gar- bzw. Kochvorgang die vorgegebene Gar- bzw. Kochzeit tg so zu verkürzen, dass automatisch die auftretende Abkühlphase berücksichtigt wird und dass im bzw. am Dampfdruckkochgefäss tatsächlich nur über die vorgegebene Gar- bzw. Kochzeit tg die Gar- bzw. Kochtemperatur eingehalten und das Heizelement rechtzeitig abgeschaltet wird. Dies erfolgt nach einer Ausgestaltung dadurch, dass aus dem ermittelten Anstieg der Temperatur-Zeit-Kennlinie eine erste Menge an flüssigem Kochgut und aus der gemessenen Zeitdauer eine zweite Menge an festem Kochgut in äquivalenten Wassereinheiten ermittelt werden und dass die Zeitspanne für die Gesamtmenge des Kochgutes aus der Summe der Menge an flüssigem und festem Kochgut aus der für das gesamte System gegebenen zweiten Funktion tv = f(M+M') ermittelt wird.

Das Verfahren nach der Erfindung lässt sich dadurch vereinfachen, dass der ermittelte Anstieg der Temperatur-Zeit-Kennlinie nur dann für die Ermittlung der Zeitspanne zur Verkürzung der vorgegebenen Gar- bzw. Kochzeit herangezogen wird, wenn dieser einen vorgegebenen Wert unterschreitet, sowie dass beim Unterschreiten des vorgegebenen Wertes für den ermittelten Anstieg der Temperatur-Zeit-Kennlinie die Messung der Zeitdauer unterbunden wird und dass die Zeitspanne nur aus der gegebenen zweiten Funktion tv = f(M+M') des Systems ermittelt wird, sowie dass beim Überschreiten des vorgegebenen Wertes für den ermittelten Anstieg der Temperatur-Zeit-Kennlinie nur die Zeitdauer gemessen wird und dass die Zeitspanne aus der gegebenen zweiten Funktion tv = f(M+M') des Systems ermittelt wird. Der Vorgabewert für ΔT/Δt wird aus der Wassermenge für das Wasserbad beim Gar- bzw. Kochvorgang mit festem Kochgut festgelegt. Da der Gar- bzw. Kochvorgang bei flüssigem Kochgut diese Wassermenge in der Regel übersteigt, kann dieser Vorgabewert für $\frac{\Delta T}{\Delta t}$ der Temperatur-Zeit-Kennlinie T = f(t) mit zunehmender Menge an flüssigem Kochgut abnimmt, wird beim Unterschreiten des vorgegebenen Wertes $\frac{\Delta T}{\Delta t}$ ein Gar- bzw. Kochvorgang mit flüssigem Kochgut und beim Überschreiten dieses Wertes für $\frac{\Delta T}{\Delta t}$ ein Gar- bzw. Kochvorgang mit festem Kochgut angezeigt. Bei der Feststellung von flüssigem Kochgut reicht es dann aus, den ermittelten Anstieg $\frac{\Delta Tx}{\Delta t}$ für die Ermittlung der Kochgutmenge M und die Zeitspanne tvx zu verwenden. Die Messung der Zeitdauer s kann dabei unterbleiben. Bei der Feststellung von festem Kochgut bleibt der Anstieg $\frac{\Delta T}{\Delta t}$ der Temperatur-Zeit-Kennlinie T = f(t) für die Ableitung der Zeitspanne tv unberücksichtigt, und die Messung der Zeitdauer sx ergibt den Wert, aus dem die Menge M' an festem Kochgut und auch die Zeitspanne tvx abgeleitet werden kann. Dabei hat es sich als vollkommen ausreichend erwiesen, wenn die Zeitspanne zur Verkürzung der vorgebenen Gar- bzw. Kochzeit tg mit der im bzw. am Dampfdruckkochgefäss enthaltenen Gesamtmenge Mg an flüssigem und festem Kochgut in äquivalenten Wassereinheiten proportional zunehmend gewählt wird. Die Funktion tv = f(M+M') kann dann leicht vorgegeben und bei der Ableitung der Zeitspanne tv leicht ausgewertet werden.

Um auch Ungenauigkeiten in der Aufheizphase bei der Messung und Ableitung der Gar- bzw. Kochzeit auszuschalten, sieht eine weitere Ausgestaltung vor, dass die Messung der vorgegebenen Gar- bzw. Kochzeit beim Erreichen einer vorgegebenen Messtemperatur eingeleitet wird, die zwischen der Verdampfungstemperatur des Wassers und der eingeregelten Kochtemperatur liegt. Der Beginn der Messung der vorgegebenen Gar- bzw. Kochzeit liegt dann stets bei einer vorgegebenen Temperatur, die nahe an der eingeregelten Gar- bzw. Kochtemperatur liegt und ist daher auch unabhängig von dem Verlauf der Temperatur-Zeit-Kennlinie T = f(t) in der Aufheizphase.

Eine einfache Vorrichtung zur Durchführung des Verfahrens nach der Erfindung ist dadurch gekennzeichnet, dass zur Messung der Temperatur im bzw. am Dampfdruckkochgefäss ein Temperaturfühler verwendet ist, der ein der Temperatur proportionales Signal abgibt, dass ein Differenzierglied aus dem Signal des Temperaturfühlers ein den Anstieg der Temperatur-Zeit-Kennlinie proportionales Auswertesignal ermittelt, dass beim Erreichen der den Beginn der Dampfphase kennzeichnenden Temperatur eine Zeitmesseinrichtung ansteuerbar ist, die die Zeitdauer bis zum Erreichen der die Verdampfungstemperatur des Wassers anzeigenden Temperatur misst, dass einer Logik das den ermittelten Anstieg kennzeichnende Auswertesignal, die ermittelte Zeitdauer und die vorgegebene Gar- bzw. Kochzeit zugeführt sind und dass die Logik daraus unter Berücksichtigung der vorgegebenen ersten und zweiten Funktionen $\frac{\Delta T}{\Delta t}$ = f(M), s = f(M') und tv = f(M+M') die verkürzte Gar- bzw. Kochzeit ermittelt und nach dem Ablauf dieser verkürzten Gar- bzw. Kochzeit die Abschaltung des Heizelementes einleitet. Die beim Verfahren vorgesehenen Vereinfachungen lassen sich bei dieser Vorrichtung einfach dadurch realisieren, dass die Logik das Auswertesignal nur verarbeitet, wenn der ermittelte Anstieg der Temperatur-Zeit-Kennlinie den vorgegebenen Wert unterschreitet und dass die Ansteuerung der Zeitmesseinrichtung unterbunden ist, wenn der ermittelte Anstieg der Temperatur-Zeit-Kennlinie den vorgegebenen Wert übersteigt.

Die Erfindung wird anhand der Zeichnungen näher erläutert. Es zeigt:

Fig. 1 die Temperatur-Zeit-Kennlinie bei einem Gar- bzw. Kochvorgang mit flüssigem Kochgut;

Fig. 2 die Funktion $\frac{\Delta T}{\Delta t}$ = f(M) eines vorgegebenen Gar- bzw. Kochsystems, die für einen ermittelten Anstieg ΔT/Δt der Kennlinie nach Fig. 1 direkt eine Aussage über die Menge M (in äquivalenten Wassereinheiten WE) an flüssigem Kochgut im Dampfdruckkochgefäss zulässt;

Fig. 3 die Temperatur-Zeit-Kennlinien bei einem Gar- bzw. Kochvorgang mit festem Kochgut über einem Wasserbad zur Dampferzeugung;

Fig. 4 die Funktion s = f(M') desselben vorgegebenen Gar- bzw. Kochsystems, die für eine ermittelte Zeitdauer s gemäss den Kennlinien nach Fig. 3 direkt eine Aussage über die Menge M' (in äquivalenten Wassereinheiten WE) an festem Kochgut im Dampfdruckkochgefäss zulässt;

Fig. 5 die Funktion tv = f(M+M') desselben Gar- bzw. Kochsystems, die die Zeitspanne tv angibt, um die die vorgegebene Gar- bzw. Kochzeit tg bei der ermittelten Gesamtmenge Mg = M+M' (in äquivalenten Wassereinheiten WE) an Kochgut verkürzt werden kann, um das Heizelement vorzeitig abzuschalten und die Temperatur Tm über die vorgegebene Gar- bzw. Kochzeit tg aufrechtzuerhalten;

Fig. 6 ein Blockschaltbild einer Vorrichtung zur Durchführung des Verfahrens;

Fig. 7 die Temperatur-Zeit-Kennlinie T = f(t) bei einem Gar- bzw. Kochvorgang mit flüssigem Kochgut unter Verwendung des Verfahrens nach der Erfindung, und

Fig. 8 die Temperatur-Zeit-Kennlinie T = f(t) bei einem Gar- bzw. Kochvorgang mit festem Kochgut unter Verwendung des Verfahrens nach der Erfindung.

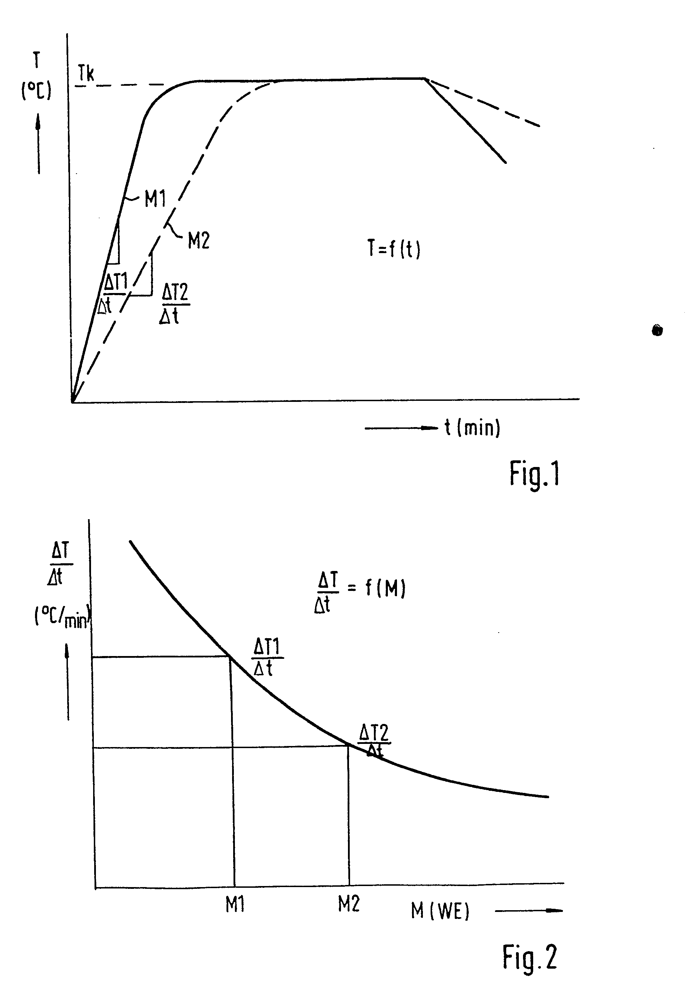

Das Diagramm nach Fig. 1 zeigt die Temperatur-Zeit-Kennlinie T = f(t) für ein gegebenes Gar- bzw. Kochsystem aus Heizelement und Dampfdruckkochgefäss, wobei T die Temperatur in °C im bzw. am Dampfdruckkochgefäss angibt, die zur Regelung der Heizleistung ausgenützt wird. Nach der Aufheizphase wird daher im Dampfdruckkochgefäss eine konstante Gar- bzw. Kochtemperatur Tk eingeregelt, die zwischen 110 bis 120 °C liegen kann. Dabei ist im Dampfdruckkochgefäss ein flüssiges Kochgut der eingangs definierten Art enthalten. Wie die Kennlinien zeigen, ist der Anstieg $\frac{\Delta T1}{\Delta t}$ bzw. ΔT2/Δt der Temperatur-Zeit-Kennlinie T = f(t) von der Menge M1 bzw. M2 an flüssigem Kochgut abhängig.

Mit zunehmender Menge an flüssigem Kochgut nimmt der Anstieg $\frac{\Delta T}{\Delta t}$ der Temperatur-Zeit-Kennlinie T = f(t) ab. Die Abhängigkeit zeigt die Funktion ΔT/Δt = f(M) nach Fig. 2. Diese Funktion ist für ein gegebenes Gar- bzw. Kochsystem eine feste Grösse, und daher kann der ermittelte An-

stieg $\Delta T/\Delta t$ der Temperatur-Zeit-Kennlinie unmittelbar eine Aussage über die Menge M an flüssigem Kochgut im Dampfdruckkochgefäss machen.

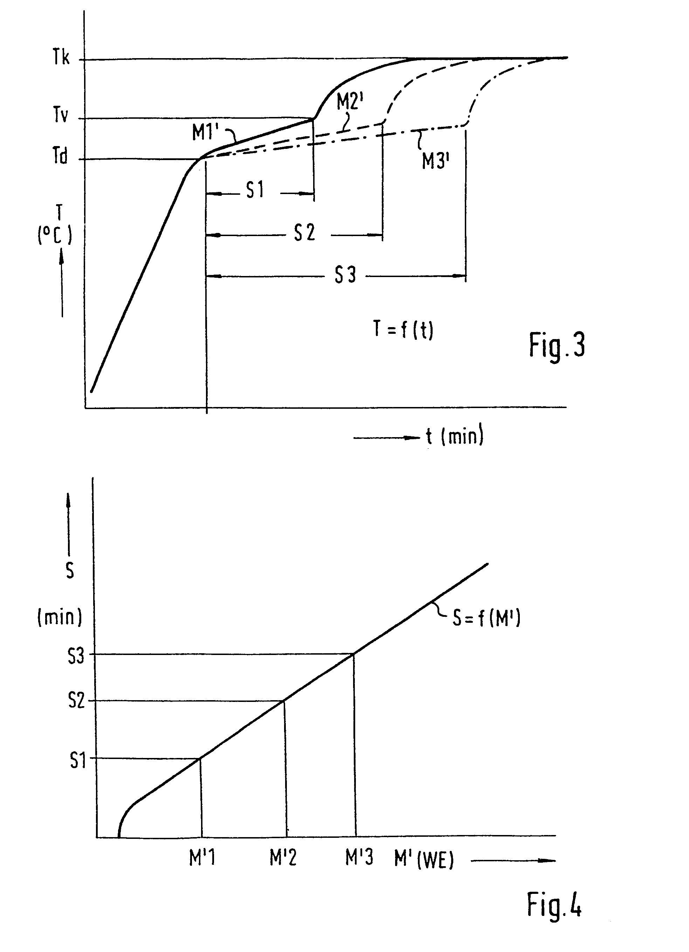

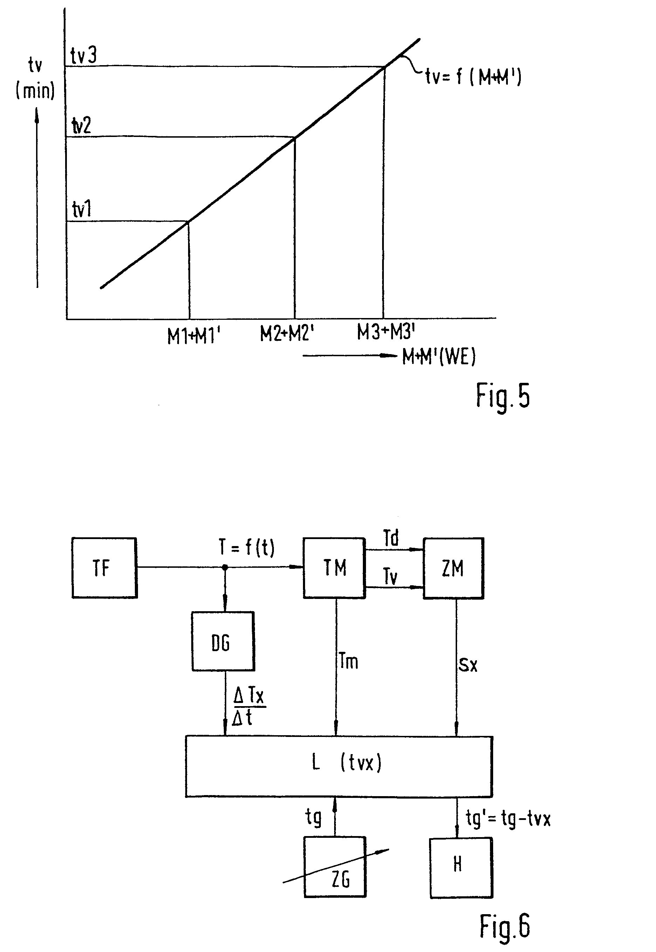

Das Diagramm nach Fig. 3 zeigt die Temperatur-Zeit-Kennlinie $T = f(t)$ für dasselbe Gar- bzw. Kochsystem für einen Gar- bzw. Kochvorgang mit festem Kochgut gemäss der eingangs gemachten Definition. Das Wasserbad zur Dampferzeugung hat eine kleine Menge, so dass der Anstieg der Kennlinie unabhängig von der Menge M1', M2' bzw. M3' an festem Kochgut sehr gross ist, und zwar gleich bis zu der Temperatur Td $\sim$ 90 °C, bei der der Beginn der Dampfphase einsetzt. Als Beginn der Dampfphase wird das Erreichen der Temperatur angesehen, bei der der Anstieg der Temperatur-Zeit-Kennlinie $T = f(t)$ sich verlangsamt. Dies ist auf den erhöhten Energieentzug durch den Verdampfungsvorgang zurückzuführen. Die Aufheizphase bis zur Verdampfungstemperatur Tv $\sim$ 100 °C ist jedoch abhängig von der Menge M' an festem Kochgut. Dabei ist Voraussetzung, dass während dieses Teiles des Aufheizvorganges das Ventil bzw. Hilfsventil des Dampfdruckkochgefässes noch geöffnet ist. Wie Fig. 4 zeigt, ist die Zeitdauer s, die vom Erreichen der Temperatur Td bis zum Erreichen der Temperatur Tv verstreicht, unmittelbar ein Mass für die im Dampfdruckkochgefäss erhaltene Menge M' an festem Kochgut. Die Zeitdauer s ist dabei proportional zur Menge M' an festem Kochgut, wie die für die Mengen M1', M2' und M3' ermittelten Werte s1, s2 und s3 der Zeitdauer s zeigen.

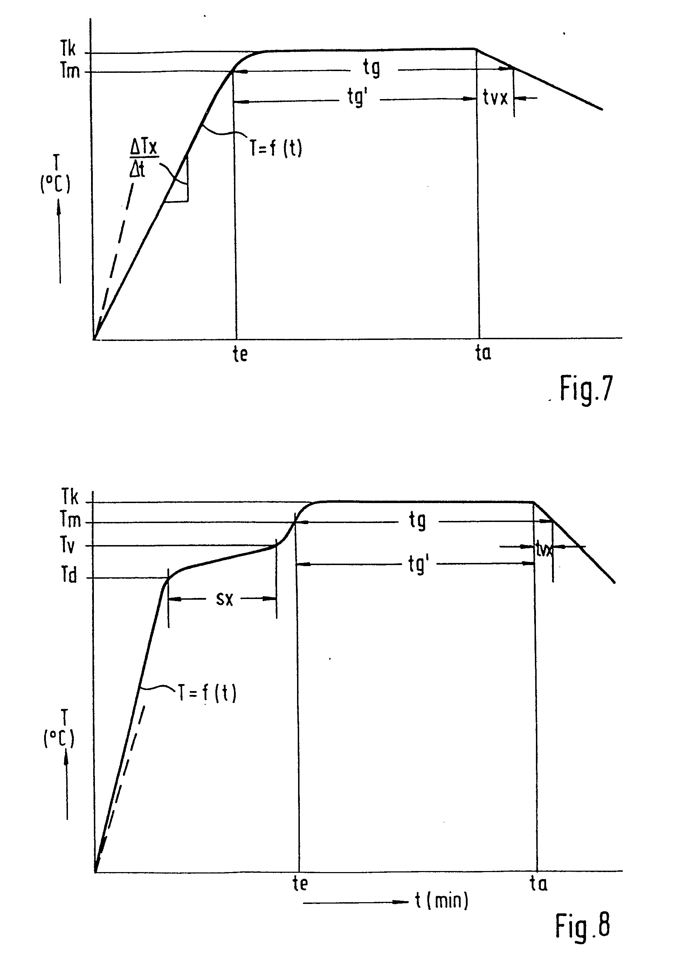

Es hat sich nun herausgestellt, dass die Gesamtmenge Mg an Kochgut die Abkühlphase beeinflusst. Wird das Heizelement abgeschaltet, dann fällt die Temperatur-Zeit-Kennlinie $T = f(t)$ je nach vorhandener Kochgutmenge schneller oder langsamer, wie die Diagramme nach Fig. 7 und 8 erkennen lassen. Wird der Gar- bzw. Kochvorgang auf eine vorgegebene Zeit tg begrenzt, dann wird eine Messtemperatur Tm verwendet, die etwas unterhalb der Gar- bzw. Kochtemperatur Tk liegt. Wird in der Aufheizphase die Messtemperatur Tm erreicht, dann beginnt die Messung der vorgegebenen Gar- bzw. Kochzeit. Dies ist vom Zeitpunkt te der Temperatur-Zeit-Kennlinie $T = f(t)$ der Fall. Wird zum Zeitpunkt ta das Heizelement abgeschaltet, dann beginnt die Abkühlphase. Es verstreicht noch die Zeitspanne tv, bis die Temperatur von der Gar- bzw. Kochtemperatur Tk auf die Messtemperatur Tm abfällt. In dieser Zeitspanne tv kann also noch davon gesprochen werden, dass der Gar- bzw. Kochvorgang andauert. Wenn also über die Gar- bzw. Kochzeit tg die Temperatur Tm aufrechterhalten werden soll, dann kann die verkürzte Gar- bzw. Kochzeit tg' als Differenz tg − tv gewählt werden, d.h. das Heizelement kann schon zum Zeitpunkt ta vorzeitig abgeschaltet werden. Wie das Diagramm nach Fig. 5 zeigt, hängt die Zeitspanne tv von der Kochgutmenge M bzw. M' bzw. M+M' im Dampfdruckkochgefäss ab. Für ein gegebenes Gar- bzw. Kochsystem ist die Funktion tv = $f(M+M')$ eine feste Grösse. Wenn also aus dem ermittelten Anstieg $\underline{\Delta Tx}$ der Temperatur-Zeit- $\Delta t$

Kennlinie $T = f(t)$ und der ermittelten Zeitdauer sx zwischen der Temperatur Td und der Temperatur Tv der Temperatur-Zeit-Kennlinie $T = f(t)$ die Mengen M und M' an flüssigem und festem Kochgut ermittelt werden können, erlaubt die Funktion tv = $f(M+M')$ sofort eine Aussage über die Abkühlphase und die Zeitspanne tv. Mit der Erfassung des Anstieges $\underline{\Delta Tx}$ und der Zeitdauer sx in der Tempe- $\Delta t$

ratur-Zeit-Kennlinie $T = f(t)$ ist es also möglich, auf die Art des Kochgutes und die Menge des Kochgutes zu schliessen und die vorgegebene Gar- bzw. Kochzeit tg automatisch so zu beeinflussen, dass die vorzeitige Abschaltung des Heizelementes zum Einhalten der Messtemperatur Tm über eine Zeit, die der vorgegebenen Gar- bzw. Kochzeit tg entspricht.

Wie das Blockschaltbild nach Fig. 6 zeigt, wird die Temperatur im bzw. am Dampfdruckkochgefäss mittels eines Temperaturfühlers TF erfasst. Der Temperaturfühler TF gibt ein Ausgangssignal ab, das der Temperatur im Dampfdruckkochgefäss proportional ist und auch dem Verlauf der Temperatur-Zeit-Kennlinie $T = f(t)$ entspricht. Mittels eines Differenziergliedes DG wird aus dem Ausgangssignal des Temperaturfühlers TF ein den Anstieg $\underline{\Delta Tx}$ kennzeichnendes Auswertesignal $\Delta t$

gewonnen. Ausserdem steuert das Ausgangssignal des Temperaturfühlers TF die Temperaturmesseinrichtung TM, die beim Auftreten der Temperatur Td die Zeitmesseinrichtung ZM ansteuert. Die Zeitmesseinrichtung ZM ermittelt die Zeitdauer s, die bis zum Erreichen der Temperatur Tv verstreicht, das der Zeitmesseinrichtung ZM von der Temperaturmesseinrichtung TM mitgeteilt wird. Die Zeitmesseinrichtung ZM gibt ein die Zeitdauer sx kennzeichnendes Signal an die Logik L, der auch von dem Differenzierglied DG das dem Anstieg $\underline{\Delta Tx}$ kennzeichnende Auswertesignal zu- $\Delta t$

geführt wird. Die Logik L leitet aus diesen Signalen unter Berücksichtigung der festen Grössen des Gar- bzw. Kochsystems, d.h. den Funktionen $\underline{\Delta T}$ $\Delta t$

= $f(M)$, s = $f(M')$ und tv = $f(M+M')$ die Zeitspanne tvx ab, um die die vorgegebene Gar- bzw. Kochzeit tg zu verkürzen ist. Das Ansteuern des Heizelementes H erfolgt nur über die verkürzte Zeit tg'. Die gewünschte Gar- bzw. Kochzeit tg wird über das einstellbare Zeitglied ZG vorgegeben und der Logik L zugeführt. Da der Logik L auch das Erreichen der Messtemperatur Tm angezeigt wird, kann sie den Zeitpunkt te für die Zeitmessung festlegen und mit der verkürzten Zeit tg' den Zeitpunkt ta für das Abschalten des Heizelementes H automatisch richtig setzen. Dadurch passt sich dieser Abschaltzeitpunkt ta automatisch an die Art und Menge des Kochgutes an und bei der Gar- bzw. Kochzeit sind auch die Zeitkonstanten des Gar- bzw. Kochsystems automatisch mit berücksichtigt.

Wenn mit der Vorrichtung nach Fig. 6 der Gar- bzw. Kochvorgang nach Fig. 7 überwacht und gesteuert wird, dann wird in der Anstiegsphase

der Anstieg $\underline{\Delta Tx}$ ermittelt. Dieser Anstieg ist klei-
$\Delta t$
ner als ein vorgegebener Anstieg, wie er gestrichelt in Fig. 7 angedeutet ist. Soll die Temperatur
Tm vom Zeitpunkt te aus über die vorgegebene
Gar- bzw. Kochzeit tg eingehalten werden, dann
muss schon zum Zeitpunkt ta das Heizelement H
abgeschaltet werden, da die Abkühlphase über
die Zeitspanne tvx hinweg eine Temperatur grösser als Tm aufweist. Der ermittelte Anstieg $\underline{\Delta Tx}$
$\Delta t$
wird der Logik L zugeführt, die daraus erkennt,
dass es sich um einen Gar- bzw. Kochvorgang mit
flüssigem Kochgut handelt. Eine Zeitmessung
erübrigt sich, und die Logik L kann schon aus dem
ermittelten Anstieg $\underline{\Delta Tx}$ die Zeitspanne tvx und
$\Delta t$
damit den Abschaltezeitpunkt ta festlegen.

Ähnlich verhält es sich, wenn mit der Vorrichtung nach Fig. 6 im vereinfachten Verfahren der
Gar- bzw. Kochvorgang nach Fig. 8 überwacht und
gesteuert wird. In der Anstiegsphase wird ein $\underline{\Delta Tx}$
$\Delta t$
ermittelt, das gleich oder grösser ist als der vorgegebene Wert, wie er gestrichelt eingetragen ist.
Dieser Wert wird unter Berücksichtigung der Wassermengen des Wasserbades zur Dampferzeugung festgelegt, und zwar so, dass er beim Gar-
bzw. Kochvorgang mit festem Kochgut überschritten wird. Die Logik L erkennt daraus, dass ein Gar-
bzw. Kochvorgang mit festem Kochgut vorliegt.
Der Anstieg $\underline{\Delta Tx}$ bleibt unberücksichtigt, und es
$\Delta t$
wird nur die Zeitdauer sx ermittelt und zur Ableitung der Zeitspanne tvx ausgenützt.

Selbstverständlich kann die Logik L auch stets
beide ermittelten Werte, d. h. den Anstieg $\underline{\Delta Tx}$ und
$\Delta t$
die Zeitdauer sx, zur Ableitung der Zeitspanne tvx
ausnützen. Die ermittelten Mengen M an flüssigem Kochgut und M′ an festem Kochgut werden
addiert und zur Ableitung der Zeitspanne tvx aus
der Funktion tv = f(M,M′) verwendet.

**Patentansprüche**

1. Verfahren zum Steuern des Gar- bzw. Kochvorganges bei einem mittels eines über eine Steuerschaltung gesteuerten Heizelementes (H) beheizten Dampfdruckkochgefäss, bei dem die Temperatur im bzw. am Dampfdruckkochgefäss erfasst und über die Steuerschaltung zur Regelung
der Heizleistung des Heizelementes (H) ausgenützt wird und bei dem mittels eines einstellbaren
Zeitgliedes (ZG) eine Gar- bzw. Kochzeit (tg) vorgebbar ist, dadurch gekennzeichnet, dass in der
Aufheizphase der Anstieg ($\underline{\Delta Tx}$) der Temperatur-
$\Delta t$
Zeit-Kennlinie [T = f(t)] des gesamten Systems
aus Heizelement (H) und Dampfdruckkochgefäss
ermittelt wird, dass die Zeitdauer (sx), die vom
Erreichen der Temperatur (Td ~ 90 °C) des Beginns der Dampfphase bis zum Erreichen der Verdampfungstemperatur (Tv ~ 100 °C) des Wassers
im Dampfdruckkochgefäss verstreicht, gemessen
wird, und dass die vorgegebene Gar- bzw. Kochzeit (tg) in Abhängigkeit des ermittelten Anstiegs
($\underline{\Delta Tx}$) und der gemessenen Zeitdauer (sx) so be-
$\Delta t$
einflusst wird, dass sie um eine Zeitspanne (tvx)
verkürzt wird, die um so grösser ist, desto kleiner
der ermittelte Anstieg ($\underline{\Delta Tx}$) und desto grösser die
$\Delta t$
ermittelte Zeitdauer (sx) sind.

2. Verfahren nach Anspruch 1, dadurch gekennzeichnet, dass mit dem ermittelten Anstieg ($\underline{\Delta Tx}$)
$\Delta t$
der Temperatur-Zeit-Kennlinie [T = f(t)] aus einer
für das gesamte System aus Heizelement (H) und
Dampfdruckkochgefäss gegebenen ersten Funktion [$\underline{\Delta T}$ = f(M)] für den Anstieg ($\underline{\Delta T}$ ) in Abhän-
$\Delta t$                                    $\Delta t$
gigkeit der Menge (M) an flüssigem Kochgut die
im Dampfdruckkochgefäss befindliche Menge (M)
an flüssigem Kochgut in äquivalenten Wassereinheiten (WE) ermittelt wird und dass aus einer
gegebenen zweiten Funktion [tv = f(M)] für die
Zeitspanne (tv) in Abhängigkeit von der Menge
(M) und flüssigem Kochgut des Systems die Zeitspanne (tvx) ermittelt wird, um die die vorgegebene Gar- bzw. Kochzeit (tg) für die im Dampfdruckkochgefäss befindliche Menge (M) an flüssigem
Kochgut zu verkürzen ist.

3. Verfahren nach Anspruch 1, dadurch gekennzeichnet, dass mit der gemessenen Zeitdauer (sx)
aus einer für das gesamte System aus Heizelement (4) und Dampfdruckkochgefäss gegebener
ersten Funktion [s = f(M′)] für die Zeitdauer (s) in
Abhängigkeit von der Menge (M′) an festem Kochgut die im Dampfdruckkochgefäss befindliche
Menge (M′) an festem Kochgut über einer zur
Dampfbildung eingebrachten kleinen Wassermenge in äquivalenten Wassereinheiten (WE) ermittelt wird und dass aus einer für das gesamte
System gegebenen zweiten Funktion [tv = f(M′)]
für die Zeitspanne (tv) in Abhängigkeit von der
Menge (M′) an festem Kochgut die Zeitspanne
(tvx) ermittelt wird, um die die vorgegebene Gar-
bzw. Kochzeit (tg) für die im Dampfdruckkochgefäss befindliche Menge (M′) an festem Kochgut zu
verkürzen ist.

4. Verfahren nach Anspruch 2 und 3, dadurch
gekennzeichnet, dass aus dem ermittelten Anstieg
($\underline{\Delta T}$ ) der Temperatur-Zeit-Kennlinie [T = f(t)] eine
$\Delta t$
erste Menge (M) an flüssigem Kochgut und aus
der gemessenen Zeitdauer (sx) eine zweite Menge
(M′) an festem Kochgut in äquivalenten Wassereinheiten (WE) ermittelt werden und dass die Zeitspanne (tvx) für die Gesamtmenge (Mg) des Kochgutes aus der Summe der Mengen (M+M′) an
flüssigem und festem Kochgut aus der für das
gesamte System gegebenen zweiten Funktion [tv
= f(M+M′)] ermittelt wird.

5. Verfahren nach einem der Ansprüche 1 bis 4,
dadurch gekennzeichnet, dass der ermittelte Anstieg (ΔTx/Δt) der Temperatur-Zeit-Kennlinie [T =
f(t)] nur dann für die Ermittlung der Zeitspanne
(tvx) zur Verkürzung der vorgegebenen Gar- bzw.
Kochzeit (tg) herangezogen wird, wenn dieser einen vorgegebenen Wert unterschreitet.

6. Verfahren nach Anspruch 5, dadurch gekennzeichnet, dass beim Unterschreiten des vorgegebenen Wertes für den ermittelten Anstieg ($\Delta Tx/\Delta t$) der Temperatur-Zeit-Kennlinie [T = f(t)] die Messung der Zeitdauer (sx) unterbunden wird und dass die Zeitspanne (tvx) nur aus der gegebenen zweiten Funktion [tv = f(M+M')] des Systems ermittelt wird.

7. Verfahren nach einem der Ansprüche 1 bis 6, dadurch gekennzeichnet, dass beim Überschreiten des vorgegebenen Wertes für den ermittelten Anstieg $\left(\dfrac{\Delta Tx}{\Delta t}\right)$ der Temperatur-Zeit-Kennlinie [T = f(t)] nur die Zeitdauer (sx) gemessen wird und dass die Zeitspanne (tvx) aus der gegebenen zweiten Funktion [tv = f(M+M')] des Systems ermittelt wird.

8. Verfahren nach einem der Ansprüche 1 bis 7, dadurch gekennzeichnet, dass die Zeitspanne (tvx) zur Verkürzung der vorgegebenen Gar- bzw. Kochzeit (tg) mit der im Dampfdruckkochgefäss enthaltenen Gesamtmenge (Mg) an flüssigem und festem Kochgut (M+M') in äquivalenten Wassereinheiten (WE) proportional zunehmend gewählt wird.

9. Verfahren nach einem der Ansprüche 1 bis 8, dadurch gekennzeichnet, dass die Messung der vorgegebenen Gar- bzw. Kochzeit (tg) beim Erreichen einer vorgegebenen Messtemperatur (Tm) eingeleitet wird, die zwischen der Verdampfungstemperatur (Tv) des Wassers und der eingeregelten Kochtemperatur (Tk) liegt.

10. Vorrichtung zur Durchführung des Verfahrens nach einem der Ansprüche 1 bis 9, dadurch gekennzeichnet, dass zur Messung der Temperatur im bzw. am Dampfdruckkochgefäss ein Temperaturfühler (TF) verwendet ist, der ein der Temperatur (T) proportionales Signal abgibt, dass ein Differenzierglied (DG) aus dem Signal des Temperaturfühlers (TF) ein dem Anstieg ($\Delta Tx/\Delta t$) der Temperatur-Zeit-Kennlinie [T = f(t)] proportionales Auswertesignal ermittelt, dass beim Erreichen der den Beginn der Dampfphase kennzeichnenden Temperatur (Td) eine Zeitmesseinrichtung (ZM) ansteuerbar ist, die die Zeitdauer (sx) bis zum Erreichen der die Verdampfungstemperatur (Tv) des Wassers anzeigenden Temperatur misst, dass einer Logik (L) das den ermittelten Anstieg ($\Delta Tx/\Delta t$) kennzeichnende Auswertesignal, die ermittelte Zeitdauer (sx) und die vorgegebene Gar- bzw. Kochzeit (tg) zugeführt sind und dass die Logik (L) daraus unter Berücksichtigung der vorgegebenen ersten und zweiten Funktionen $\left[\dfrac{\Delta T}{\Delta t} = f(M),\ s = f(M')\ und\ tv = f(M,M')\right]$ die verkürzte Gar- bzw. Kochzeit (tg') ermittelt und nach dem Ablauf dieser verkürzten Gar- bzw. Kochzeit (tg') die Abschaltung des Heizelementes (H) einleitet.

11. Vorrichtung nach Anspruch 10, dadurch gekennzeichnet, dass die Logik (L) das Auswertesignal nur verarbeitet, wenn der ermittelte Anstieg $\left(\dfrac{\Delta Tx}{\Delta t}\right)$ der Temperatur-Zeit-Kennlinie [T = f(t)] den vorgegebenen Wert unterschreitet.

12. Vorrichtung nach Anspruch 10 und 11, dadurch gekennzeichnet, dass die Ansteuerung der Zeitmesseinrichtung (ZM) unterbunden ist, wenn der ermittelte Anstieg $\left(\dfrac{\Delta Tx}{\Delta t}\right)$ der Temperatur-Zeit-Kennlinie [T = f(t)] den vorgegebenen Wert übersteigt.

**Claims**

1. Method of controlling the simmering or cooking process in a pressure-cooking vessel that is heated by means of a heating element (H) controlled by a control circuit, whereby the temperature in or on the pressure-cooking vessel is measured and used to regulate the heating power of the heating element (H) via the control circuit, and whereby a simmering or cooking time (tg) can be set in advance by means of an adjustable timing element (ZG), characterized by the fact, that in the heating-up phase the rise $\left(\dfrac{\Delta Tx}{\Delta t}\right)$ in the temperature-time characteristic curve [T = f(t)] of the whole system consisting of heating element (H) and pressure-cooking vessel is established, that the time (sx) is measured that elapses between the reaching of the temperature at the beginning of the steam phase (Td ~ 90 °C) and the reaching of the vaporizing temperature (Tv ~ 100 °C) of the water in the pressure-cooking vessel, and that the predetermined simmering or cooking time (tg) as a function of the established rise $\left(\dfrac{\Delta Tx}{\Delta t}\right)$ and the time measured (sx) is influenced in such a way that it is shortened by a period of time (tvx) that is correspondingly greater, the smaller the established rise $\left(\dfrac{\Delta Tx}{\Delta t}\right)$ is and the greater the time measured (sx) is.

2. Method according to claim 1, characterized by the fact, that with the established rise $\left(\dfrac{\Delta Tx}{\Delta t}\right)$ in the temperature-time characteristic curve [T = f(t)] from a given first function $\left[\dfrac{\Delta T}{\Delta t} = f(M)\right]$ for the whole system consisting of heating element (H) and pressure-cooking vessel for the rise $\left(\dfrac{\Delta T}{\Delta t}\right)$ as a function of the amount (M) of liquid food to be cooked, the amount (M) of liquid food to be cooked that is in the pressure-cooking vessel is established in terms of equivalent units of water (WE), and that from a given second function [tv = f(M)] of the system for the period of time (tv) as a function of the amount (M) of liquid food to be cooked the length of time (tvx) is established by which the predetermined simmering or cooking time (tg) for the amount (M) of liquid food to be cooked that is in the pressure-cooking vessel is to be shortened.

3. Method according to claim 1, characterized by the fact, that, with the measured time (sx) from a given first function [s = f(M')] for the whole system consisting of heating element (H) and pressure-cooking vessel, for the time (s) as a function of the amount (M') of solid food to be cooked that is in the pressure-cooking vessel the amount (M') of solid food to be cooked that is in the pressure-cooking vessel is measured in equivalent units of water (WE) via a small quantity of water introduced for the purposes of creating steam, and that, from a given second function [tv = f(M')] for the whole system for the time (tv) as a function of the amount (M') of solid food to be cooked, the period of time (tvx) is established by which the predetermined simmering or cooking time (tg) is to be shortened for the amount (M') of solid food to be cooked that is in the pressure-cooking vessel.

4. Method according to claims 2 and 3, characterized by the fact, that a first amount (M) of liquid foods to be cooked is established from the measured rise $\left(\dfrac{\Delta Tx}{\Delta t}\right)$ in the temperature-time characteristic curve [T = f(t)], and a second amount (M') of solid food to be cooked measured in equivalent water units (WE) is established from the measured period of time (sx), and that the length of time (tvx) for the whole amount (Mg) of food to be cooked is established from the sum of the amounts (M+M') of liquid and solid food from the given second function [tv = f(M+M')] for the whole system.

5. Method according to one of the claim 1 to 4, characterized by the fact that the established rise $(\Delta Tx/\Delta t)$ in the temperature-time characteristic curve [T = f(t)] is only taken into consideration for establishing the length of time (tvx) by which the predetermined simmering or cooking time (tg) is shortened if it is less than a predetermined value.

6. Method according to claim 5, characterized by the fact, that when the predetermined value for the established rise $(\Delta Tx/\Delta t)$ in the temperature-time characteristic curve [T = f(t)] the measurement of the time (sx) is suppressed, and that the length of time (tvx) is only established from the given second function [tv = f(M+M')] of the system.

7. Method according to one of the claims 1 to 6, characterized by the fact that when the predetermined value for the established rise $\left(\dfrac{\Delta Tx}{\Delta t}\right)$ in the temperature-time characteristic curve [T = f(t)] is exceeded only the time (sx) is measured, and that the length of time (tvx) is established from the given second function [tv = f(M+M')] of the system.

8. Method according to one of the claims 1 to 7, characterized by the fact that the length of time (tvx) for shortening the predetermined simmering or cooking time (tg) is selected in a manner that rises proportional to the total amount (Mg) of liquid and solid food (M+M') in equivalent units of water (WE).

9. Method according to one of the claims 1 to 8, characterized by the fact that the measurement of the predetermined simmering and cooking time (tg) is initiated when a predetermined measuring temperature (Tm) is reached that lies between the vaporizing temperature (Tv) of the water and the adjusted cooking temperature (Tk).

10. Device for the realization of the method according to one of the claims 1 to 9, characterized by the fact that for measuring the temperature in or on the pressure-cooking vessel a temperature sensor (TF) is used which emits a signal that is proportional to the temperature (T), that a differentiating element (DG) establishes and evaluating signal from the signal from the temperature sensor (TF) that is proportional to the rise $(\Delta Tx/\Delta t)$ in the temperature-time characteristic curve [T = f(t)], that when the temperature (Td) that marks the start of the steam phase is reached, a time-measuring device (ZM) can be trigered that measures the time (sx) until the temperature is reached that marks the vaporizing temperature (Tv) of the water, that the evaluating signal marking the established rise $(\Delta Tx/\Delta t)$, the established time (sx) and the predetermined simmering or cooking time (tg) are fed to a logic component (L), and that the logic component (L) establishes the shortened simmering or cooking time (tg') while taking the predetermined first and second functions $[\Delta Tx/\Delta t = f(M), s = f(M')$ and tv = f(M,M')] into consideration, and causes the heating element (H) to switch off after this shortened simmering or cooking time (tg') has elapsed.

11. Device according to claim 10, characterized by the fact, that the logic component (L) only processes the evaluating signal when the established rise $(\Delta Tx/\Delta t)$ in the temperature-time characteristic curve [T = f(t)] does not reach the predetermined value.

12. Device according to claims 10 and 11, characterized by the fact that the triggering of the time-measuring device (ZM) is suppressed when the established rise $(\Delta Tx/\Delta t)$ in the temperature-time characteristic curve [T = f(t)] exceeds the predetermined value.

**Revendications**

1. Procédé pour commander la cuisson dans un autocuiseur chauffé à l'aide d'un élément chauffant (H) commandé par un circuit de commutation de commande, dans lequel la température régnant dans ou sur l'autocuiseur est décelée et est utilisé, par l'intermédiaire du circuit de commutation de commande, pour réguler la puissance de chauffage de l'élément chauffant (H), et dans lequel on peut déterminer à l'avance, à l'aide d'un circuit ou relais temporisateur (ZG) réglable, un temps (tg) de cuisson (cuisson à point ou par ébullition), caractérisé en ce que, cans la phase d'échauffement, on détermine la croissance $\left(\dfrac{\Delta Tx}{\Delta t}\right)$ de la courbe correspondant à la fonction [t = f(t)] caractérisant la variation de la température en fonction du temps pour l'ensemble du système formé par l'élément chauffant (H) et l'autocuiseur, en ce qu'on mesure l'intervalle de temps (sx) qui s'entend de l'apparition de la température (Td valant approximativement 90 °C) de début de phase de présence de vapeur jusqu'à l'apparition de la température d'évaporation (Tv valant approximativement (100 °C) de l'eau dans l'autocuiseur, et en ce qu'on influe sur le temps prédéterminé (tg) de cuisson, en fonction de l'accroissement ($\underline{\Delta Tx}$) déterminé et de l'intervalle de temps
$$\Delta t$$
(sx) mesuré, de façon à raccourcir ce temps d'un intervalle ou d'une durée (tvx) d'autant plus grand l'accroissement ($\underline{\Delta Tx}$) déterminé est plus petit et
$$\Delta t$$
que l'intervalle de temps (sx) déterminé est plus grand.

2. Procédé selon la revendication 1, caractérisé qu'avec l'accroissement ($\underline{\Delta Tx}$) déterminé pour la
$$\Delta t$$
courbe représentant la fonction [T = f(t)] caractérisant la variation de la température en fonction du temps, on détermine à partir d'une première fonction [$\underline{\Delta Tx}$ = f(M)] indiquant l'augmentation ($\underline{\Delta T}$)
$$\Delta t \qquad\qquad \Delta t$$
en fonction de la quantité (M) de matière liquide à cuire, la quantité (M) de matière liquide se trouvant dans l'autocuiseur, indiquée en unités d'équivalence en eau (WE), et en ce que, à partir d'une seconde fonction [tv = f(M)] donnée pour le système et décrivant l'intervalle de temps (s) en fonction de la quantité (M') de matière solide à faire cuire qui se trouve dans l'autocuiseur, on détermine l'intervalle de temps (tvx) dont il faut raccourcir le temps (tg) prédéterminé de cuisson de la quantité (M) de matière liquide se trouvant dans l'autocuiseur pour sa cuisson.

3. Procédé selon la revendication 1, caractérisé en ce qu'avec d'intervalle de temps (sx) mesuré à partir d'une première fonction [s = f(M')] donnée et décrivant, pour la totalité du système formé de l'élément chauffant (H) et de l'autocuiseur, l'intervalle de temps (s) en fonction de la quantité (M') de matière solide se trouvant dans l'autocuiseur, on détermine la quantité (M') en unités d'équivalence en eau (WE) de matière solide à faire cuire à l'aide d'une faible quantité d'eau introduite pour former de la vapeur d'eau, et en ce qu'à partir d'une seconde fonction [tv = f(M')] dérivant, pour la totalité du système, l'intervalle de temps (tv) en fonction de la quantité (M') de matière solide à faire cuire, on détermine l'intervalle de temps (tvx) dont il faut raccourcir le temps (tg) prédéterminé de cuisson dans le cas de la quantité (M') de matière solide se trouvant pour sa cuisson dans l'autocuiseur.

4. Procédé selon la revendication 2 et 3, caractérisé en ce qu'à partir de l'accroissement ($\underline{\Delta Tx}$)
$$\Delta t$$
déterminé pour la courbe correspondant à la fonction [T = f(t)] caractérisant la variation de la température en fonction du temps, on détermine une première quantité (M) de matière liquide à faire cuire et, à partir de l'intervalle de temps mesuré (sx) on détermine, en des unités d'équivalence en eau (WE), une seconde quantité (M') de matière solide à cuire, et en ce qu'on détermine l'intervalle de temps (tvx) pour la quantité totale (Mg) de la matière à cuire, à partir de la somme des quantités (M+M') de matière liquide et de matière solide à cuire, à partir de la seconde fonction [tv = f(M+M')] donnée pour l'ensemble du système.

5. Procédé selon l'une des revendications 1 à 4, caractérisé en ce qu'on ne fait appel à la croissance ($\Delta T/\Delta t$) déterminée pour la courbe représentant la fonction [T = f(t)] correspondant à la variation de la température en fonction du temps, pour déterminer l'intervalle de temps (tvx) dont il faut raccourcir le temps (tg) prédéterminé de cuisson, que lorsque l'accroissement est inférieur à une valeur prédéterminée.

6. Procédé selon la revendication 5, caractérisé en ce que, lorsque l'accroissement ($\Delta Tx/\Delta t$) déterminé pour la courbe représentative de la fonction [T = f(t)] correspondant à la variation de la température en fonction du temps est inférieur à la valeur prédéterminée, on abandonne la mesure de l'intervalle de temps (sx) et en ce qu'on ne détermine l'intervalle de temps (tvx) qu'à partir de la seconde fonction [tv = f(M+M')] donnée pour le système.

7. Prodécé selon l'une des revendications 1 à 6, caractérisé en ce que, lorsque l'accroissement ($\underline{\Delta Tx}$) de la courbe correspondant à la fonction [T
$$\Delta t$$
= f(t)] décrivant la variation de la température en fonction du temps excède la valeur prédéterminée, on ne mesure que la durée (sx), et en ce que l'on détermine l'intervalle de temps (tvx) à partir de la seconde fonction [tv = f(M+M')] donnée pour le système.

8. Procédé selon l'une des revendications 1 à 7, caractérisé en ce qu'on choisit l'intervalle de temps (tvx), dont il faut raccourcir le temps (tg) prédéterminé de cuisson, de manière qu'il augmente proportionellement à la quantité totale (Mg) de matière liquide et de matière solide (M+M'), exprimée en unités d'équivalence en eau (WE), à cuire, contenue dans l'autocuiseur.

9. Procédé selon l'une des revendications 1 à 8, caractérisé en ce qu'on fait débuter la mesure du temps (tg) prédéterminé de cuisson lorsqu'est atteinte une température (Tm) prédéterminée de mesure, se situant entre la température (Tv) d'évaporation de l'eau et la température (Tk) programmée pour la cuisson.

10. Appareil pour la mise en œuvre du procédé selon l'une quelconque des revendications 1 à 9, caractérisé en ce que l'on utilise, pour mesurer la température dans ou sur l'autocuiseur, une sonde (TF) de température qui émet un signal proportionnel à la température (T); en ce qu'un circuit différentiateur (DG) détermine à partir du signal émis par la sonde (TF) de température un signal d'évaluation proportionnel à la croissance ($\Delta Tx/\Delta t$) de la courbe représentative de la fonction [T = f(t)] décrivant la variation de la température en fonction du temps; en ce que, lorsqu'est atteinte la température (Td) caractérisant le début de la phase vapeur, on peut mettre en service un dispositif (ZM) de mesure du temps qui mesure l'intervalle de temps (sx) s'écoulant jusqu'à l'apparition de la température indiquant la température (TV) d'évaporation de l'eau; en ce que le signal d'évaluation caractérisant l'accroissement ($\Delta Tx/\Delta t$) dé-

terminé, la durée (sx) déterminée et le temps (tg) prédéterminé de cuisson, sont transmis à un circuit logique (L), et en ce que, en tenant compte des première et seconde fonctions $[\frac{\Delta T}{\Delta t} = f\,(M);$

$s = f(M')$ et $tv = f(M,M')]$ prédéterminées, le circuit logique (L) déduit le temps réduit (tg') de cuisson (cuisson à point ou par ébullition) et, après écoulement de ce temps (tg') réduit de cuisson, il provoque la coupure de l'élément chauffant (H).

11. Appareil selon la revendication 10, caractérisé en ce que le circuit logique (L) ne traite le signal d'evaluation que lorsque l'accroissement $(\frac{\Delta Tx}{\Delta t})$ déterminé pour la courbe correspondant à la fonction $[T = f(t)]$ décrivant la variation de la température en fonction du temps est inférieure à la valeur prédéterminée.

12. Appareil selon la revendication 10 et 11, caractérisé en ce que la mise en service du dispositif (ZM) de mesure du temps est évitée quand l'accroissement $(\frac{\Delta Tx}{\Delta t})$ déterminé pour la courbe représentative de la fonction $[T = f(t)]$ décrivant la variation de la température en fonction du temps excède la valeur prédéterminée.

Fig.1

Fig.2

Fig.3

Fig.4

Fig.5

Fig.6

Fig.7

Fig.8